# EUROPÄISCHE PATENTSCHRIFT

(11) **EP 3 006 973 B1**
(45) Veröffentlichungstag und Bekanntmachung des Hinweises auf die Patenterteilung: **21.02.2018**
(21) Anmeldenummer: 14187799.3
(22) Anmeldetag: 06.10.2014
(51) Int. Cl.: G02B 7/08

(54) **FOKUSVERSTELLVORRICHTUNG FÜR EIN BILDERFASSUNGSSYSTEM**
FOCUS ADJUSTMENT DEVICE FOR AN IMAGE ACQUISITION SYSTEM
DISPOSITIF DE RÉGLAGE D'OBJECTIF POUR UN SYSTÈME DE SAISIE D'IMAGES

(43) Veröffentlichungstag der Anmeldung: 13.04.2016
(73) Patentinhaber: SICK AG, 79183 Waldkirch (DE)
(72) Erfinder: Anselment, Christoph, 79183 Waldkirch (DE)
(74) Vertreter: Ludewigt, Christoph

(56) Entgegenhaltungen:
- EP-A1- 2 075 488
- EP-A1- 2 498 113
- WO-A1-2006/074695
- WO-A2-2008/010151
- DE-A1- 10 160 587
- DE-A1-102011 117 743
- US-A- 5 377 048

## Beschreibung

Die Erfindung betrifft eine Fokusverstellvorrichtung für ein Bilderfassungssystem gemäß dem Oberbegriff des Anspruchs 1.

Bilderfassungssysteme werden zunehmend auch in der heutigen Industrie eingesetzt, um optische Codes, wie Barcodes oder Matrixcodes, oder zu überwachende Bereiche zu erfassen. Dabei wird ein Bild des Codes oder der Umgebung aufgenommen und anschließend die Bilddaten mit digitaler Bildverarbeitung ausgelesen.

Diese Bilderfassungssysteme verfügen über eine Focusverstellung, um Bilder über einen geforderten Arbeitsbereich hinweg scharf aufzunehmen. Meistens wird das mit einem Autofokus verbunden, bei dem der Abstand zu dem aufzunehmenden Objekt bestimmt und die Fokuslage entsprechend eingestellt wird.

Aus der EP 2 498 113 B1 ist eine Fokusverstellvorrichtung für ein Bilderfassungssystem, insbesondere für einen Codeleser, der genannten Art bekannt. Das Bilderfassungssystem umfasst ein Objektiv mit zumindest einer Linse und eine Motoreinrichtung zur Positionsverstellung des Objektivs, wobei die Linse auf einem bewegbaren Linsenhalter vorgesehen ist.

Hierbei ist der Linsenhalter in einer Parallelführung gelagert, die über eine Ankopplungseinheit mit der Motoreinrichtung verbunden ist. Mittels einer Kurvenscheibe, die durch die Motoreinrichtung angetrieben wird, wird der Linsenhalter entlang der Paralleleinrichtung bewegt, wodurch die Position des Objektivs unter Parallelverschiebung der Objektivebene verstellt wird.

Die Parallelverschiebung des Linsenhalters durch die Kurvenscheibe ermöglicht eine schnelle Bewegung des Objektivs in eine geforderte Fokuslage ohne dabei Abbildungsfehler zu erzeugen.

WO 2006/074695 A1 offenbart einen ähnlichen Aufbau einer Fokusverstellvorrichtung, wobei der Linsenhalter einen ersten und einen zweiten Führungsabschnitt aufweist. Der erste Führungsabschnitt ist mittels einer Führungshülse und einer Führungsstange mechanisch aufgebaut. Der zweite Führungsabschnitt ist mittels einer Magneteinrichtung und einer mechanischen Führungsschiene magnetisch aufgebaut. Der erste Führungsabschnitt ist durch ein elastisches Kopplungselement an einer Antriebseinheit, bestehend aus einer Drehspindel, einem Körper und einem Motor, angekoppelt.

EP 2 075 488 A1 beschreibt ein selbstanpassendes Schraubengetriebe, bei dem eine Nuss mit einem Stift um eine Gewindestange angeordnet ist und der Stift in das Gewinde der Gewindestange eingreift. Durch Drehen der Gewindestange wird die Nuss mittels des Stiftes entlang der axialen Achse der Gewindestange bewegt.

Es ist eine Aufgabe der vorliegenden Erfindung, eine Focusverstellvorrichtung für ein Bilderfassungssystem der eingangs genannten Art derart zu modifizieren, dass eine kleine und integrierte Bauform mit hoher Lebensdauer der Lagereinheit erzielbar ist.

Die Aufgabe wird erfindungsgemäß gelöst durch eine Focusverstellvorrichtung mit den Merkmalen des Anspruchs 1.

Dies hat den Vorteil, dass der zylinderförmige Stift ohne Gleitreibung entlang des Gewindegangs der Gewindeeinheit rollen kann, so dass der Linsenhalter entsprechend der Drehung der Gewindeeinheit bewegt werden kann. Weiterhin weist der zylinderförmige Stift vorteilhafterweise eine definierte Spielfreiheit und Anlage auf.

Gemäß einem weiteren bevorzugten Ausführungsbeispiel ragt der zylinderförmige Stift einseitig aus der Lagereinheit in die Gewindeeinheit hinein, so dass die Focusverstellvorrichtung vorteilhafterweise kompakt gestaltet werden kann.

Weiterhin weist gemäß einem bevorzugten Ausführungsbeispiel der zylinderförmige Stift einen definierten Durchmesser auf, so dass der zylinderförmige Stift in dem Gewindegang der Gewindeeinheit rollbar ist. Hierdurch ergibt sich lediglich marginale Rollreibung zwischen dem zylinderförmigen Stift und dem Gewindegang der Gewindeeinheit, so dass die Lebensdauer der Focusverstellvorrichtung deutlich erhöht werden kann.

Ferner besteht gemäß einem weiteren bevorzugten Ausführungsbeispiel die Lagereinheit aus einem Kugel-, Stift-, Zylinderlager oder dergleichen.

Gemäß einem weiteren bevorzugten Ausführungsbeispiel umfasst die Gewindeeinheit eine Gewindespindel.

Hierdurch kann die erfindungsgemäße Focusverstellvorrichtung kostengünstig durch die Verwendung von Standardbauteilen hergestellt werden.

Vorteilhafterweise definiert die Gewindesteigung minus die Dicke der Auflagefläche des Gewindes den Gewindegang der Gewindeeinheit, wobei der Gewindegang größer als der definierte Durchmesser des zylinderförmigen Stifts ist.

Ferner umfasst gemäß einem weiteren bevorzugten Ausführungsbeispiel die Motoreinrichtung eine Motoreinheit, die koaxial zu der Gewindeeinheit angeordnet ist und die Gewindeeinheit dreht.

Die erfindungsgemäße Vorrichtung kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine 3D-Darstellung einer erfindungsgemäßen Focusverstellvorrichtung;
- Fig. 2: eine Schnittansicht der 3D-Darstellung der erfindungsgemäßen Focusverstellvorrichtung;
- Fig. 3: eine Seitenansicht auf die erfindungsgemäße Lagereinheit der erfindungsgemäßen Focusverstellvorrichtung;
- Fig. 4: eine Schnittansicht der erfindungsgemäßen Focusverstellvorrichtung entlang der Schnittebene A - A;
- Fig. 4a: eine Detailansicht der erfindungsgemäßen Lagereinheit.

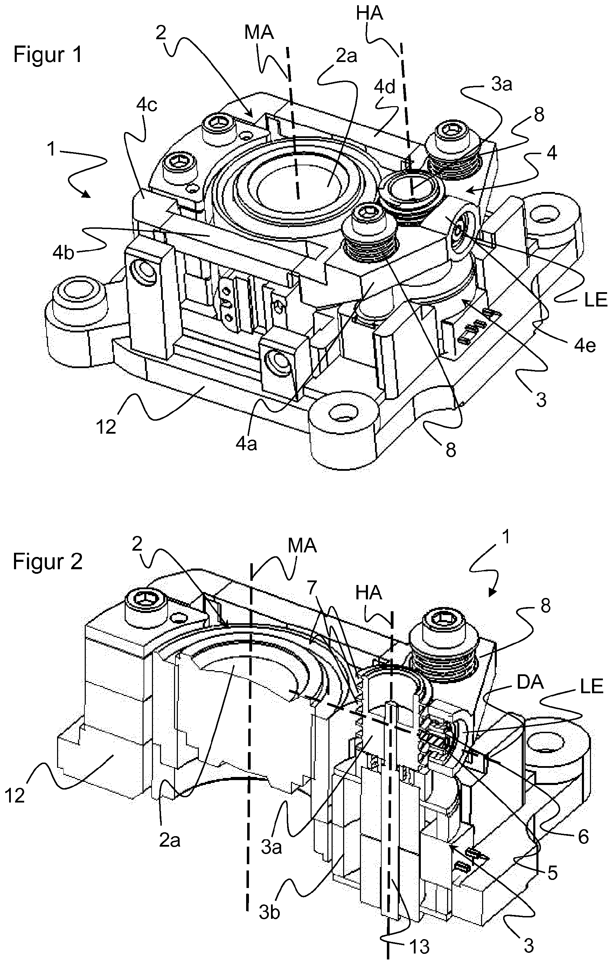

Die Figuren 1 bis 4a zeigen unterschiedliche Ansichten einer bevorzugten Ausführungsform einer erfindungsgemäßen Fokusverstellvorrichtung 1 für ein Bilderfassungssystem, die eine Position eines Objektivs 2 mit zumindest einer Linse 2a verstellt. In allen Figuren bezeichnen gleiche Bezugszeichen jeweils die gleichen Merkmale.

Einzelheiten des Bilderfassungssystems und des Objektivs 2 werden nicht erläutert, da die erfindungsgemäße Focusverstellvorrichtung 1 für unterschiedliche Bilderfassungssysteme, wie Codeleser oder Kamerasensoren, mit unterschiedlichen Objektiven 2 mit unterschiedlicher Anzahl von Linsen 2a, Blenden und sonstigen üblichen optischen Elementen eines Objektivs 2 geeignet ist.

Figur 1 zeigt eine 3D-Darstellung der erfindungsgemäßen Focusverstellvorrichtung 1, die auf einer Grundplatte 12 zum Befestigen in dem Bilderfassungssystem montiert ist.

Auf der Grundplatte 12 sind das Objektiv 2 mit zumindest einer Linse 2a und eine Motoreinrichtung 3 zur Positionsverstellung des Objektivs 2 montiert. Die Linse 2a ist auf einem Linsenhalter 4 vorgesehen, der gegenüber der Grundplatte 12 bewegbar ist. Die Motoreinrichtung 3 umfasst eine Gewindeeinheit 3a und eine Motoreinheit 3b, wobei die Gewindeeinheit 3a von der Motoreinheit 3b drehbar angetrieben wird und die Gewindeeinheit 3a und die Motoreinheit 3b koaxial zueinander angeordnet sind.

Somit weisen die Gewindeeinheit 3a und die Motoreinheit 3b eine gemeinsame Hauptachse HA auf, wobei die Motoreinrichtung 3 derart auf der Grundplatte 12 montiert ist, dass die Hauptachse HA der Motoreinrichtung 3 parallel zu einer Mittelachse MA des Objektivs 2 bzw. der Linse 2a des Bilderfassungssystems ausgerichtet ist.

Der Linsenhalter 4 weist eine quaderförmige Form auf, die aus vier Seitenteilen 4a bis 4d besteht. Das die Motoreinrichtung 3 gegenüberliegende Seitenteil 4c des Linsenhalters 4 ist mittels Schrauben fest an die Grundplatte 12 montiert. Das an der Seite der Motoreinrichtung 3 liegende Seitenteil 4a weist einen zylindrischen Abschnitt 4e auf, in dem eine Lagereinheit LE angeordnet ist.

Ferner sind zwei Federn 8 und 8 an den Befestigungsschrauben des Seitenteils 4a mit dem zylindrischen Abschnitt 4e vorgesehen, die die Lagereinheit LE in Richtung der Gewindeeinheit 3a drücken.

Die Lagereinheit LE verbindet den bewegbaren Linsenhalter 4 mit der Gewindeeinheit 3a der Motoreinrichtung 3 derart, so dass die Lagereinheit LE mit dem Linsenhalter 4 entsprechend einer Drehung der Gewindeeinheit 3a entlang der Hauptachse HA der Gewindeeinheit 3a rollbar ist. D.h. in Bezug auf die Grundplatte 12 rollt die Lageeinheit LE mit dem Linsenhalter 4 durch eine entsprechende Drehung der Gewindeeinheit 3a hin zu der Grundplatte 12 oder von dieser weg. Hierbei ist eine Drehachse DA der Lagereinheit LE senkrecht zu der Hauptachse HA der Gewindeeinheit (3a) gerichtet, so dass die Rollbewegung der Lagereinheit LE eine translatorische Bewegung des Linsenhalters 4 entlang der Hauptachse HA der Gewindeeinheit 3a bewirkt.

In der Figur 2 ist eine Schnittansicht der erfindungsgemäßen Focusverstellvorrichtung 1, wie in der Figur 1 gezeigt, dargestellt.

Hieraus ist erkennbar, dass die Drehachse DA der Lagereinheit LE senkrecht zu der Hauptachse HA der Motoreinrichtung 3 bzw. der Mittelachse MA des Objektivs 2 ausgerichtet ist, so dass die Lagereinheit LE parallel zu der Hauptachse HA rollbar bzw. bewegbar ist.

Ferner umfassen die Gewindeeinheit 3a vorzugsweise eine Gewindespindel und die Lagereinheit LE einen zylinderförmigen Stift 5, wobei der zylinderförmige Stift 5 in einem Innenring 6 der Lagereinheit LE koaxial mit der Drehachse DA der Lagereinheit LE vorgesehen ist und in einen Gewindegang 7 der Gewindeeinheit 3a hineinragt.

Durch das Hineinragen des zylinderförmigen Stifts 5 in den Gewindegang 7 der Gewindeeinheit 3a kann der zylinderförmige Stift ohne Gleitreibung entlang des Gewindegangs der Gewindeeinheit rollen, so dass der Linsenhalter entsprechend der Drehung der Gewindeeinheit bewegt werden kann.

Weiterhin ragt der zylinderförmige Stift 5 einseitig aus der Lagereinheit LE in die Gewindeeinheit 3a hinein, so dass ein kompakter Aufbau der Focusverstellvorrichtung 1 möglich ist.

Die Motoreinheit 3b der Motoreinrichtung 3 ist über eine Welle 13 mit der Gewindespindel der Gewindeeinheit 3a verbunden. Durch Antreiben der Motoreinheit 3b wird die Gewindespindel zum Drehen um die Hauptachse HA der Motoreinrichtung 3 veranlasst.

Da der zylinderförmige Stift 5 einen definierten Durchmesser φ aufweist und der Gewindegang 7 größer als der definierte Durchmesser φ des zylinderförmigen Stifts 5 ist, kann der zylinderförmige Stift 5 in dem Gewindegang 7 bzw. entlang des Gewindegangs 7 rollen, so dass sich der zylinderförmige Stift 5 zusammen mit der Lagereinheit LE und dem Linsenhalter 4 parallel zu der Hauptachse HA der Motoreinrichtung 3 bewegt.

Diese Bewegung bewirkt eine Positionsänderung der Linse 2a, wodurch der Focus des Objektivs 2 verändert werden kann.

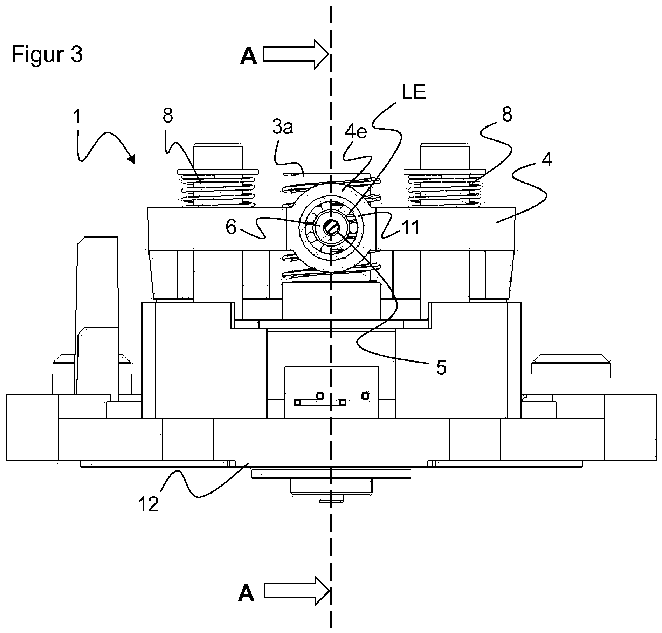

Figur 3 zeigt eine Seitenansicht der erfindungsgemäßen Focusverstellvorrichtung 1, bei der insbesondere auf die Lagereinheit LE draufgeschaut wird. Die Lagereinheit LE kann aus einem Kugel-, Stift-, Zylinderlager oder dergleichen bestehen, wobei ein Außenring 11 der Lagereinheit LE auf den zylindrischen Abschnitt 4e des Linsenhalters 4 gepresst ist. In dem Innenring 6 der Lagereinheit LE ist der zylinderförmige Stift 5 eingepresst.

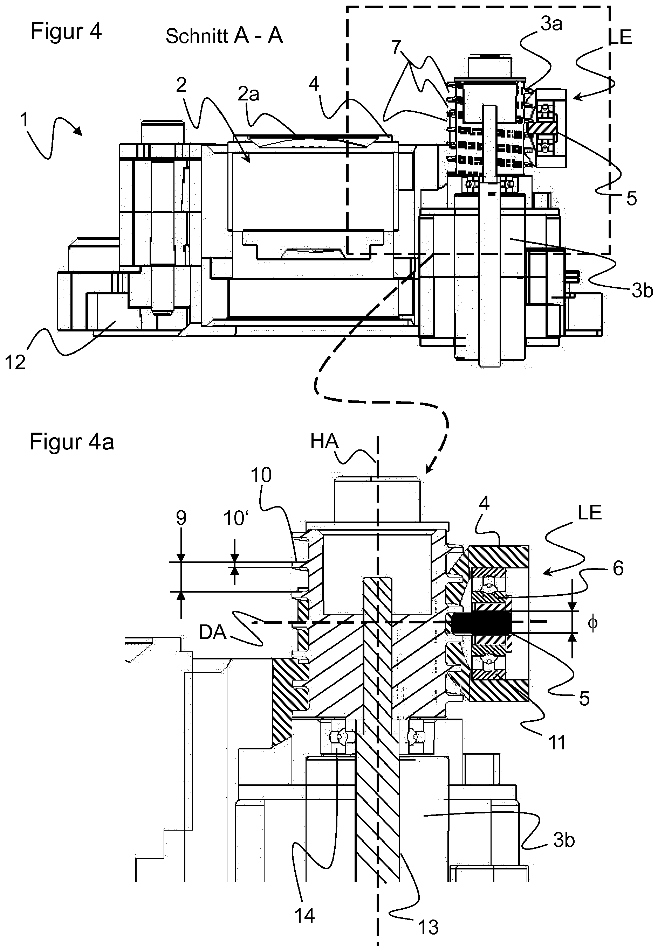

Die Figur 4 zeigt eine Schnittansicht der erfindungsgemäßen Focusverstellvorrichtung 1 entlang der in der Figur 3 gezeigten Ebene A - A. Hieraus ist insbesondere die spiralförmige Form des Gewindegangs 7 der Gewindespindel der Gewindeeinheit 3a zu entnehmen, wobei der zylinderförmige Stift 5 der Lagereinheit LE in den Gewindegang 7 hineinragt.

Durch Drehen der Gewindespindel der Gewindeeinheit 3a mittels der Motoreinheit 3b kann sich die Lagereinheit LE, wie in der Figur dargestellt, auf- oder abwärts bewegen, da der zylinderförmige Stift 5 entlang dem spiralförmigen Gewindegang 7 entsprechend der Drehung, die eine Beförderungsrichtung vorgibt, abrollt.

Bei dieser Auf- oder Abwärtsbewegung der Lagereinheit LE wird der mit der Lagereinheit LE verbundene Linsenhalter 4 auf der Seite der Motoreinrichtung 3 von der Grundplatte 12 wegbewegt oder zu der Grundplatte 12 hinbewegt, wodurch eine Focusänderung ohne Verkippung des Objektivs 2 erzielt wird.

Die Gewindeeinheit 3a, insbesondere der Gewindegang 7, weist eine Auflagefläche 10 des Gewindes mit definierter Dicke 10' auf, auf der der zylinderförmige Stift 5 aufliegt bzw. abrollt. Ferner weist die Gewindeeinheit 3a eine definierte Gewindesteigung 9 auf, so dass je nach der definierten Gewindesteigung 9 eine Verstellung des Focusses des Objektivs 2 vorgebbar ist. D.h. je größer die Gewindesteigung 9 ist, desto schneller lässt sich der Focus des Objektivs 2 verstellen wie bei einer kleinen Gewindesteigung 9, bei gleicher Umdrehung der Gewindeeinheit 3a. Je kleiner die Gewindesteigung 9 ist, desto feiner lässt sich der Focus des Objektivs 2 einstellen.

Der Gewindegang 7 der Gewindeeinheit 3a ist somit über die Gewindesteigung 9 minus der Dicke 10' der Auflagefläche 10 des Gewindes definiert. Wie in der Figur 4a gezeigt, ist der Gewindegang 7 der Gewindeeinheit 3a größer als der definierte Durchmesser φ des zylinderförmigen Stifts 5, so dass der zylinderförmige Stift 5 ohne Gleitreibung in dem Gewindegang 7 der Gewindeeinheit 3a rollen kann.

Die Gewindeeinheit 3a ist über Lager 14 auf der Motoreinheit 3b aufgestützt und durch die Welle 13 mit der Motoreinheit 3b spielfrei verbunden. Der zylinderförmige Stift 5 ist in dem Innenring 6 der Lagereinheit LE gelagert und der Außenring 11 der Lagereinheit LE ist mit dem Linsenhalter 4 verbunden.

Somit finden sämtliche Verstellungen des Focusses des Objektivs 2 durch Rollbewegungen der entsprechenden Komponenten der erfindungsgemäßen Focusverstellvorrichtung 1 statt. Dadurch sind Gleitreibungen vermieden, so dass die Lebensdauer der Komponenten der erfindungsgemäßen Focusverstellvorrichtung 1 wesentlich erhöht ist.

### Bezugszeichenliste

- 1: Focusverstellvorrichtung
- 2: Objektiv
- 2a: Linse
- 3: Motoreinrichtung
- 3a: Gewindeeinheit
- 3b: Motoreinheit
- 4: Linsenhalter
- 4a - 4d: Seitenteile des Linsenhalters
- 4e: Zylindrischer Abschnitt
- 5: Zylinderförmiger Stift
- 6: Innenring
- 7: Gewindegang
- 8: Feder
- 9: Gewindesteigung
- 10: Auflagefläche
- 10': Dicke der Auflagefläche
- 11: Außenring
- 12: Grundplatte
- 13: Welle
- 14: Lager der Motoreinrichtung
- DA: Drehachse
- HA: Hauptachse
- LE: Lagereinheit
- MA: Mittelachse
- φ: Dicke des zylindrischen Stifts

## Patentansprüche

1. Fokusverstellvorrichtung (1) für ein Bilderfassungssystem, das ein Objektiv (2) mit zumindest einer Linse (2a) umfasst, wobei die Fokusverstellvorrichtung (1) einen bewegbaren Linsenhalter (4), der zur Aufnahme der Linse (2a) vorgesehen ist, sowie eine Motoreinrichtung (3) zur Positionsverstellung des Objektivs (2) umfasst, **dadurch gekennzeichnet, dass** der bewegbare Linsenhalter (4) mit einer Gewindeeinheit (3a) der Motoreinrichtung (3) über eine in dem bewegbaren Linsenhalter (4) angeordneten Lagereinheit (LE) derart verbunden ist, so dass die Lagereinheit (LE) mit dem Linsenhalter (4) entsprechend einer Drehung der Gewindeeinheit (3a) entlang einer Hauptachse (HA) der Gewindeeinheit (3a) rollbar ist, und eine Drehachse (DA) der Lagereinheit (LE) senkrecht zu der Hauptachse (HA) der Gewindeeinheit (3a) gerichtet ist, wobei die Lagereinheit (LE) einen zylinderförmigen Stift (5) umfasst, wobei der zylinderförmige Stift (5) in einem Innenring (6) der Lagereinheit (LE) koaxial mit der Drehachse (DA) der Lagereinheit (LE) vorgesehen ist und in einen Gewindegang (7) der Gewindeeinheit (3a) hineinragt, und wobei die Gewindeeinheit (3a) eine definierte Gewindesteigung (9) entsprechend einer vorgegebenen Verstellung des Fokusses und eine Auflagefläche (10) des Gewindes, auf der der zylinderförmige Stift (5) aufliegt bzw. abrollt, mit definierter Dicke (10') aufweist, und zwei Federn (8) die Lagereinheit (LE) in Richtung der Gewindeeinheit (3a) entlang der Hauptachse (HA) drücken.

2. Fokusverstellvorrichtung (1) nach Anspruch 1, **dadurch gekennzeichnet, dass** der zylinderförmige Stift (5) einseitig aus der Lagereinheit (LE) in die Gewindeeinheit (3a) hineinragt.

3. Fokusverstellvorrichtung (1) nach Anspruch 1 oder 2, **dadurch gekennzeichnet, dass** der zylinderförmige Stift (5) einen definierten Durchmesser (φ) aufweist, so dass der zylinderförmige Stift (5) in dem Gewindegang (7) der Gewindeeinheit (3a) rollbar ist.

4. Fokusverstellvorrichtung (1) nach einem der vorhergehenden Ansprüche, **dadurch gekennzeichnet, dass** die Lagereinheit (LE) aus einem Kugel-, Stift-, Zylinderlager besteht.

5. Fokusverstellvorrichtung (1) nach einem der vorhergehenden Ansprüche, **dadurch gekennzeichnet, dass** die Gewindeeinheit (3a) eine Gewindespindel umfasst.

6. Fokusverstellvorrichtung (1) nach Anspruch 1, **dadurch gekennzeichnet, dass** die Gewindesteigung (9) minus die Dicke (10') der Auflagefläche (10) des Gewindes den Gewindegang (7) der Gewindeeinheit (3a) definiert, wobei der Gewindegang (7) größer als der definierte Durchmesser (φ) des zylinderförmigen Stifts (5) ist.

7. Fokusverstellvorrichtung (1) nach einem der vorhergehenden Ansprüche, **dadurch gekennzeichnet, dass** die Motoreinrichtung (3) eine Motoreinheit (3b) umfasst, die koaxial zu der Gewindeeinheit (3a) angeordnet ist und die Gewindeeinheit (3a) dreht.

## Claims

1. A focus adjustment apparatus (1) for an image detection system which comprises an objective (2) having at least one lens (2a), wherein the focus adjustment apparatus (1) comprises a movable lens holder (4), that is provided for receiving the lens (2a), and a motor device (3) for a positional adjustment of the objective (2), **characterized in that** the movable lens holder (4) is connected to a threaded unit (3a) of the motor device (3) via a support unit (LE) arranged in the movable lens holder (4) such that the support unit (LE) can be rolled with the lens holder (4) along a main axis (HA) of the threaded unit (3a) in accordance with a rotation of the threaded unit (3a) and such that an axis of rotation (DA) of the support unit (LE) is directed perpendicular to the main axis (HA) of the threaded unit (3a), wherein the support unit (LE) comprises a cylindrical pin (5), wherein the cylindrical pin (5) is provided in an inner ring (6) of the support unit (LE) coaxial with the axis of rotation (DA) of the support unit (LE) and projects into a thread turn (7) of the threaded unit (3a), and wherein the threaded unit (3a) has a defined thread pitch (9) corresponding to a predefined adjustment of the focus and has a support surface (10) of the thread on which the cylindrical pin (5) lies or rolls off, said support surface having a defined thickness (10'), and wherein two springs (8) press the support unit (LE) along the main axis (HA) in the direction of the threaded unit (3a).

2. A focus adjustment apparatus (1) in accordance with claim 1, **characterized in that** the cylindrical pin (5) projects unilaterally from the support unit (LE) into the threaded unit (3a).

3. A focus adjustment apparatus (1) in accordance with claim 1 or claim 2, **characterized in that** the cylindrical pin (5) has a defined diameter (φ) such that the cylindrical pin (5) can be rolled in the thread turn (7) of the threaded unit (3a).

4. A focus adjustment apparatus (1) in accordance with any one of the preceding claims, **characterized in that** the support unit (LE) comprises a ball bearing, a pin bearing, or a cylindrical bearing.

5. A focus adjustment apparatus (1) in accordance with any one of the preceding claims, **characterized in that** the threaded unit (3a) comprises a threaded spindle.

6. A focus adjustment apparatus (1) in accordance with claim 1, **characterized in that** the thread pitch (9) less the thickness (10') of the support surface (10) of the thread defines the thread turn (7) of the threaded unit (3a), wherein the thread turn (7) is larger than the defined diameter (φ) of the cylindrical pin (5).

7. A focus adjustment apparatus (1) in accordance with any one of the preceding claims, **characterized in that** the motor device (3) comprises a motor unit (3b) which is arranged coaxial to the threaded unit (3a) and which rotates the threaded unit (3a).

## Revendications

1. Dispositif de réglage de focalisation (1) pour un système de saisie d'images, qui comprend un objectif (2) avec au moins une lentille (2a), le dispositif de réglage de focalisation (1) comportant un porte-lentille mobile (4) prévu pour recevoir la lentille (2a), ainsi qu'un moyen formant moteur (3) pour le réglage de la position de l'objectif (2),
**caractérisé en ce que**
le porte-lentille mobile (4) est relié à une unité à pas de vis (3a) du moyen formant moteur (3) par une unité formant palier (LE) agencée dans le porte-lentille mobile (4), de telle sorte que l'unité formant palier (LE) est capable de rouler le long d'un axe principal (HA) de l'unité à pas de vis (3a), conjointement avec le porte-lentille (4), en correspondance d'une rotation de l'unité à pas de vis (3a),
et un axe de rotation (DA) de l'unité formant palier (LE) est dirigé perpendiculairement à l'axe principal (HA) de l'unité à pas de vis (3a), l'unité formant palier (LE) comprenant une tige cylindrique (5), la tige cylindrique (5) étant prévue dans une bague intérieure (6) de l'unité formant palier (LE) coaxialement à l'axe de rotation (DA) de l'unité formant palier (LE) et pénétrant dans un filet (7) de l'unité à pas de vis (3a), et l'unité à pas de vis (3a) présente un pas défini (9) en correspondance d'un réglage donné de la focalisation et une surface d'appui (10) du pas de vis sur laquelle repose ou roule la tige cylindrique (5) et qui présente une épaisseur définie (10'),
et deux ressorts (8) pressent l'unité formant palier (LE) en direction de l'unité à pas de vis (3a) le long de l'axe principal (HA).

2. Dispositif de réglage de focalisation (1) selon la revendication 1,
**caractérisé en ce que** la tige cylindrique (5) pénètre unilatéralement depuis l'unité formant palier (LE) dans l'unité à pas de vis (3a).

3. Dispositif de réglage de focalisation (1) selon la revendication 1 ou 2,
**caractérisé en ce que** la tige cylindrique (5) présente un diamètre défini (φ), de sorte que la tige cylindrique (5) est apte à rouler dans le filet (7) de l'unité à pas de vis (3a).

4. Dispositif de réglage de focalisation (1) selon l'une des revendications précédentes,
**caractérisé en ce que** l'unité formant palier (LE) est constituée par un roulement à billes, un roulement à aiguilles, un palier cylindrique.

5. Dispositif de réglage de focalisation (1) selon l'une des revendications précédentes,
**caractérisé en ce que** l'unité à pas de vis (3a) comprend une broche filetée.

6. Dispositif de réglage de focalisation (1) selon la revendication 1,
**caractérisé en ce que** le pas (9), déduction faite de l'épaisseur (10') de la surface d'appui (10) du pas de vis, définit le filet (7) de l'unité à pas de vis (3a), le filet (7) étant plus grand que le diamètre défini (φ) de la tige cylindrique (5).

7. Dispositif de réglage de focalisation (1) selon l'une des revendications précédentes,
**caractérisé en ce que** le moyen formant moteur (3) comprend une unité de moteur (3b) qui est agencée coaxialement à l'unité à pas de vis (3a) et qui fait tourner l'unité à pas de vis (3a).
